# DEMANDE DE BREVET EUROPEEN

(11) **EP 1 715 438 A1**
(43) Date de publication de la demande: **25.10.2006**
(21) Numéro de dépôt: 06300334.7
(22) Date de dépôt: 06.04.2006
(51) Int. Cl.: G06F 21/00, G06F 9/46, G06F 9/38

(54) **Procédé de traitement d'interruptions non sécurisées par un processeur opérant dans le mode sécurisé, processeur associé**

(30) Priorité: 18.04.2005 FR 0503867
(71) Demandeur: STMICROELECTRONICS SA, 92120 Montrouge (FR)
(72) Inventeur: Orlando, William, 13790 Peynier (FR); Schwarz, Christian, 13100 Aix en Provence (FR)
(74) Mandataire: Fleurance, Raphaël

(57) **Abrégé**

Un procédé de traitement d'interruptions dans un processeur (1) adapté pour fonctionner soit dans un premier mode, soit dans un second mode, et au moins un compteur (12) comprend les étapes suivantes, lorsqu'une interruption (I_{RT}) associée à un sous-programme d'interruption (SP_{RT}) exécutable dans le second mode est envoyée au processeur au cours de l'exécution d'un processus par ledit processeur dans le premier mode,
- au moins le compteur est initialisé à une valeur de départ (R_{D}) ; puis
- le compteur est démarré tandis que le processeur est basculé dans le second mode pour exécuter le sous-programme d'interruption associé à l'interruption ;
- lorsque le compteur atteint une valeur de fin, le processeur est ramené dans le premier mode, pour la poursuite de l'exécution du processus.

## Description

La présente invention concerne le domaine des processeurs adaptés pour traiter des applications requérant des niveaux de sécurité différents. De tels processeurs sont par exemple utilisés dans des dispositifs de type téléphone portable, PDA, décodeur TV (en anglais « set-top-box ») etc.

Sur de tels processeurs sont exécutées des applications sans besoin de sécurité particulière et des applications manipulant des informations sensibles relatives par exemple à l'authentification, au chiffrement, ou encore manipulant des données personnelles etc, auxquelles il n'est pas souhaitable de donner librement accès.

Il est souhaitable notamment de pouvoir continuer à exécuter un système d'exploitation préexistant (« Legacy OS » en anglais) tel que Windows® ou Linux®, et ses programmes d'application associés, tout en pouvant les maîtriser de manière qu'ils ne remettent pas en cause l'intégrité et la sécurité du système si un pirate venait à prendre le contrôle de l'OS en exploitant des failles.

Une tendance observée dans l'état de la technique consiste à favoriser une approche essentiellement matérielle pour atteindre un certain niveau de sécurité. Selon une telle approche, des moyens matériels additionnels permettent d'isoler et donc de protéger un domaine dit sécurisé à l'intérieur du processeur, en assurant matériellement la séparation entre le domaine sécurisé et un domaine dit non sécurisé. L'isolation consiste a empêcher l'accès aux ressources (mémoires, périphériques) du domaine sécurisé par le processeur ou par des périphériques capables de lectures/écritures lorsqu'ils ne sont pas autorisés à opérer dans le domaine sécurisé (processeur en mode non sécurisé ou bien contrôleurs DMA par exemple).

Cette approche est notamment utilisée dans les produits basés sur la technologie Trustzone^{™} de ARM. On pourra notamment se référer aux documents « TrustZone : Integrated Hardware and Software Security, Enabling Trusted Computing in Embedded Systems », de Tialgo Alves et Don Felton, juillet 2004.

Ce type d'approche s'accompagne de l'ajout d'un bit de sécurité ou « S-bit ». Ce S-bit permet d'identifier les parties du système qui appartiennent au domaine sécurisé. Un S-bit respectif est associé au coeur de processeur, à la mémoire, aux unités périphériques au processeur etc. De façon générale, les zones mémoires et les applications sont déclarées en permanence soit sécurisées soit non sécurisées et les modules matériels peuvent être en permanence sécurisés et non sécurisés ou alternativement sécurisés ou non sécurisés.

La présente invention concerne les processeurs dans lesquels est mise en oeuvre une telle séparation matérielle entre un domaine sécurisé et un domaine non sécurisé et s'intéresse tout particulièrement au traitement d'interruptions par de tels processeurs.

Une interruption est une commande indiquant d'interrompre le programme en cours de traitement au profit d'un sous-programme à exécuter (en anglais « Interrupt Service Routine »).

Classiquement, lorsque le processeur exécute un processus dans le domaine sécurisé (on parle alors de « mode sécurisé » du processeur) et qu'une interruption survient, elle est filtrée par un contrôleur d'interruptions du processeur. Si le sous-programme d'interruption associé à ladite interruption est exécutable dans le domaine non sécurisé, cette interruption n'est alors pas délivrée par le contrôleur d'interruption au processeur pour exécution. Ainsi les exécutions dans le domaine sécurisé ne sont généralement pas interrompues pour exécuter des applications dans le domaine non sécurisé.

II peut cependant s'avérer souhaitable, afin de satisfaire les contraintes de rapidité de traitement d'applications en temps réel exécutables dans le domaine non sécurisé, d'autoriser l'exécution d'un tel sous-programme et ainsi d'interrompre l'exécution du processus en mode sécurisé. L'interruption du programme sécurisé doit s'accompagner de la sauvegarde des données de contexte (sécurisées) du processus interrompu pour permettre la reprise du processus en mode sécurisé dès que possible.

Lorsque le processeur est dans le domaine non sécurisé et quand la configuration du processeur relative à la séparation des domaines sécurisé et non sécurisé est telle que lors de l'exécution d'une interruption en mode non sécurisé, aucune donnée relative au domaine sécurisé ne lui est alors accessible, le processeur n'a pas accès à l'information selon laquelle un processus en mode sécurisé a été interrompu et doit être repris.

Or il est nécessaire de pouvoir revenir dès que possible dans le mode sécurisé pour achever l'exécution du processus interrompu. En particulier, il est souhaitable de se protéger d'applications dites malicieuses qui provoqueraient des interruptions successives relatives à des sous-programmes exécutables dans le domaine non sécurisé, et qui empêcheraient ainsi le retour dans le mode sécurisé.

Dans les processeurs de l'art antérieur associé à une séparation matérielle entre un domaine sécurisé et un domaine non sécurisé, il n'est pas prévu de mécanisme permettant, une fois le processeur basculé dans le mode non sécurisé pour traiter une interruption, de provoquer le basculement inverse, ni permettant de se protéger de telles applications malicieuses.

Ci-dessous, les applications exécutables dans le domaine sécurisé seront nommées succinctement : « application sécurisées », les applications exécutables dans le domaine non sécurisé : « application non sécurisées ». De la même façon, les interruptions relatives à des sous-programmes exécutables dans le domaine sécurisé seront nommées « interruptions sécurisées » et les interruptions relatives à des sous-programmes exécutables dans le domaine non sécurisé : « interruptions non sécurisées ».

Le document US 2004/0153,672 (ARM) enseigne que lorsqu'une interruption non sécurisée survient alors que le processeur opère en mode sécurisé, le basculement du mode sécurisé au mode non sécurisé est effectué par l'intermédiaire d'un module logiciel spécifique s'exécutant dans un mode additionnel spécifique appelé mode moniteur, qui gère les transitions en mémorisant à la fois des événements relatifs au domaine non sécurisé et au domaine sécurisé. Le processeur exécute ensuite le sous-programme d'interruption dans le mode non sécurisé. Le basculement du mode non sécurisé au mode sécurisé est effectué ensuite par l'intermédiaire d'un autre module logiciel spécifique s'exécutant dans le mode moniteur.

La présente invention vise à proposer un procédé et un processeur permettant de basculer le processeur depuis le mode sécurisé vers le mode non sécurisé lors de la réception d'au moins certaines interruptions non sécurisées, et de garantir le retour du processeur depuis le mode non sécurisé vers le mode sécurisé.

A cet effet, suivant un premier aspect, l'invention propose un procédé de traitement d'interruptions dans un processeur adapté pour fonctionner soit dans un premier mode soit dans un second mode, et au moins un compteur, ledit procédé comprenant les étapes selon lesquelles, lorsqu'une interruption associée à un sous-programme d'interruption exécutable dans le second mode est envoyée au processeur au cours de l'exécution d'un processus par ledit processeur dans le premier mode ,
- le compteur est initialisé à une valeur de départ ; puis
- le compteur est démarré tandis que le processeur est basculé dans le second mode pour exécuter le sous-programme d'interruption ;
- lorsque le compteur atteint une valeur de fin, le processeur est ramené dans le premier mode pour la poursuite de l'exécution du processus.

Dans un mode de réalisation de l'invention, le premier mode est le mode sécurisé et le second mode est le mode non sécurisé.

La présente invention permet ainsi de satisfaire des contraintes temps réel d'applications du domaine non sécurisé, et ainsi d'améliorer la réactivité du système, tout en assurant le retour dans le domaine sécurisé, et donc la poursuite du traitement en mode sécurisé du processus interrompu.

L'invention permet de ne pas faire appel à un mode spécifique opérant à cheval sur les deux domaines.

Dans un mode de réalisation, le compteur est un compteur de temps. II indique un temps écoulé depuis le démarrage du compteur. La valeur de fin est un temps maximum.

Dans un autre mode de réalisation, le compteur du processeur est un compteur d'interruptions. Il compte le nombre d'interruptions à traiter par le processeur et qui sont associées à un sous-programme d'interruption exécutables dans le second mode. Ce compteur est démarré lors de la réception de la première de ces interruptions provoquant le passage du premier mode au second mode. II est successivement incrémenté lors de la réception d'une nouvelle interruption associée à un sous-programme d'interruption exécutable dans le second mode par le processeur alors que ce dernier traite une précédente interruption reçue. Le compteur est décrémenté une fois le traitement d'une de ces interruptions terminé.

Dans un mode de réalisation particulièrement avantageux, lorsqu'une interruption déterminée à traiter associée à un sous-programme d'interruption exécutable dans le second mode survient au cours d'une exécution d'un processus dans le premier mode, on initialise et on démarre à la fois un compteur d'interruptions et un compteur de temps avant de basculer dans le second mode. Et le processeur est basculé dans le premier mode lorsque le premier des deux compteurs a atteint sa valeur de fin associée. Cette disposition permet donc de retourner dans le premier mode dès que les sous-programmes sont traités et prévoit en outre un « garde-fou » empêchant une application malicieuse de retenir trop longtemps le processeur dans le second mode.

La valeur de fin associée au compteur d'interruptions est représentative d'un nombre nul d'interruptions imbriquées restant à traiter par le processeur. Typiquement, cette valeur sera zéro, mais des valeurs d'incrément, de décrément et de fin variées peuvent être utilisées.

Suivant un second aspect, l'invention propose un processeur adapté pour fonctionner soit dans un premier mode, soit dans un second mode et comprenant :
- un compteur ;
- des moyens d'initialisation pour, lorsqu'une interruption associée à un sous-programme d'interruption exécutable dans le second mode est envoyée au processeur au cours de l'exécution d'un processus par ledit processeur dans le premier mode, initialiser ledit compteur à une valeur de départ et démarrer ledit compteur ;
- des premiers moyens de basculement pour, lors du démarrage du compteur, provoquer le basculement du processeur dans le second mode pour l'exécution, dans le second mode, du sous-programme d'interruption ;
- des seconds moyens de basculement pour, lorsque le compteur atteint une valeur de fin, provoquer le retour du processeur dans le premier mode.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma représentant différents modules d'un processeur dans un mode de réalisation de l'invention ;
- la figure 2 est un schéma représentant les opérations d'un processeur selon l'invention dans les modes sécurisé et non sécurisé et les passages de l'un à l'autre ;
- la figure 3 est un schéma représentant les opérations d'un processeur selon l'invention dans les modes sécurisé et non sécurisé et les passages de l'un à l'autre.

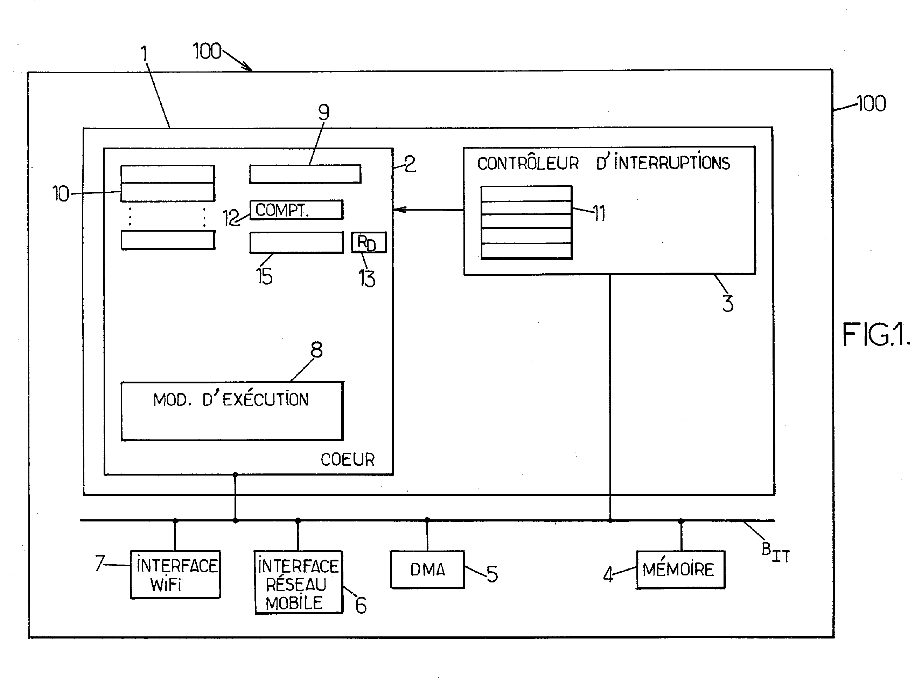

Sur la figure 1 est représenté schématiquement un dispositif 100. Ce dispositif 100 comprend un processeur 1. Ce processeur 1 comprend un coeur de processeur 2 (« core » en anglais) et un contrôleur d'interruptions 3. Le processeur 1 est relié à une mémoire 4 et à une pluralité d'unités extérieures au processeur dont trois ont été représentées sur la figure 1. Ces unités périphériques sont de nature très diverse. L'unité 5 est par exemple un contrôleur de DMA. L'unité 6 est par exemple un dispositif d'interface avec un réseau téléphonique mobile. L'unité 7 est un dispositif d'interface avec un réseau local, par exemple de type WiFi mettant en oeuvre des opérations de chiffrement, etc.

Le dispositif 100 met en oeuvre l'approche de sécurisation matérielle présentée précédemment.

Le processeur 1 notamment est adapté pour travailler soit dans un mode sécurisé, soit dans un mode non sécurisé.

Les ressources sécurisées (modules, applications, données, registres) ne sont pas accessibles par des ressources non sécurisées, cette distinction entre les deux domaines étant assurée par des moyens matériels.

Le coeur 2 du processeur 1 comporte un module d'exécution 8, un registre de mode 9, et une pluralité de registres 10 de fonctionnement. Le coeur 2 de processeur selon l'invention comporte en outre un compteur 12.

Le compteur 12 est associé à un registre de départ 13 comportant une valeur prédéfinie nommée valeur de départ R_{D}.

Le contrôleur d'interruptions 3 comporte des registres d'interruption 11.

La valeur prise par le registre de mode 9 indique le mode dans lequel est en train d'opérer le processeur. Si cette valeur est égale au S-bit, dans le cas considéré égal à 1, le processeur opère dans le mode sécurisé, sinon dans le mode non sécurisé, la valeur du registre de mode étant alors égale à 0.

Le module d'exécution 8 est adapté pour traiter les instructions des programmes lors de leur exécution par le coeur de processeur 2. Le traitement par le module d'exécution 8 d'une application sécurisée débute par le basculement du processeur dans le mode sécurisé, s'il n'était pas déjà dans ce mode. Alors les ressources sécurisées peuvent être accédées.

A l'inverse, le traitement par le module d'exécution 8 d'une application non sécurisée provoque le basculement du processeur dans le mode non sécurisé, s'il n'était pas déjà dans ce mode. Alors seules les ressources non sécurisées peuvent être accédées.

Le passage dans le mode sécurisé provoque l'enregistrement, par le module d'exécution 8, dans le registre 9 de mode, du bit de valeur 1 (S-bit). Et le passage dans le mode sécurisé provoque l'enregistrement, par le module d'exécution 8, dans le registre 9 de mode, du bit de valeur 0.

Le contrôleur d'interruptions 3 est adapté pour recevoir, par l'intermédiaire d'un bus d'interruptions B_{IT}, les interruptions en provenance de l'ensemble des unités périphériques. Il est en outre adapté pour présenter sélectivement au coeur de processeur 2, les interruptions reçues.

Les registres 11 du contrôleur d'interruption 3 comportent des données indiquant l'adresse du sous-programme d'interruption associé à chaque interruption. Ces données sont encore appelées les vecteurs d'interruption.

Le vecteur d'interruption d'une interruption sélectionnée par le contrôleur d'interruption est fournie au module d'exécution 8, pour l'exécution du sous-programme d'interruption.

Généralement, un contrôleur d'interruptions de l'art antérieur est adapté pour, lorsque le processeur est en cours d'exécution d'un processus dans le mode sécurisé, ne considérer que les interruptions relatives à des sous-programmes d'interruption sécurisés. Seuls les registres 11 relatifs aux interruptions sécurisées sont alors pris en compte par le contrôleur. Des critères supplémentaires de sélection peuvent en outre être utilisés pour filtrer les interruptions à présenter au coeur de processeur. L'ensemble de ces critères définissant le filtre appliqué sont contenus dans les registres 11 du contrôleur d'interruptions 8. Ces critères sont nommés masques d'interruptions. Ils permettent de sélectionner les interruptions à présenter par exemple en fonction du contexte (en fonction du processus en cours d'exécution etc).

De plus, généralement, une interruption sécurisée survenant alors qu'une application non sécurisée est en cours d'exécution par le coeur de processeur 2 est transmise par le contrôleur d'interruption 3 au coeur de processeur pour traitement. Elle provoque le basculement du processeur 1 en mode sécurisé pour traiter le sous-programme d'interruption sécurisé associé à l'interruption.

De façon classique, lorsque l'exécution d'un sous-programme d'interruption est achevé, un évènement se produit, indiquant cette fin de traitement, par exemple une instruction du type « End of Interrupt » est exécutée.

Dans le mode de réalisation de l'invention, il est en outre décidé, par rapport au fonctionnement d'un processeur de l'art antérieur, que certaines au moins des interruptions non sécurisées peuvent interrompre l'exécution de certains au moins des processus sécurisés.

Les processus sécurisés ainsi considérés comme interruptibles par certaines interruptions non sécurisées sont par exemple des processus dont le temps d'exécution est long.

Les interruptions non sécurisées ainsi considérées comme pouvant interrompre certains des processus sécurisés sont par exemple associées à des sous-programmes soumis à de fortes contraintes temporelles (applications temps réel).

Selon l'invention, afin de permettre que ces interruptions non sécurisées choisies puissent interrompre des processus sécurisés déterminés, ces interruptions sont déclarées sécurisées. Elles sont alors considérées par le contrôleur d'interruptions 3 lorsqu'elles surviennent alors que le coeur de processeur 2 fonctionne dans le mode sécurisé. Les registres d'interruptions 11 relatifs à ces interruptions et comportant les vecteurs et masques d'interruption sont alors accessibles au contrôleur d'interruption 3 lorsque le processeur est dans le mode sécurisé. Par ailleurs, les masques d'interruption sont complétés pour indiquer quels processus sécurisés vont pouvoir être interrompus par chacune de ces interruptions.

Par exemple l'application A effectuant des contrôles d'intégrité de données en utilisant un algorithme de chiffrement SHA-1 (Secure Hash Algorithm) est une application régulièrement exécutée dans le processeur 100.

Or le temps d'exécution de cette application est relativement long.

Par ailleurs, il est souhaitable de traiter rapidement les interruptions non sécurisées I_{RT} émises sur le bus d'interruptions B_{IT} par le dispositif 6 d'interface avec un réseau téléphonique mobile, lors la réception par ce dispositif d'un paquet de données en provenance du réseau téléphonique.

Il est, selon l'invention, décidé que si une telle interruption non sécurisée I_{RT} a lieu lors de l'exécution de l'application A par le coeur de processeur 2, l'exécution de l'application A. sera suspendue pour exécuter le sous-programme SP_{RT} non sécurisé d'interruption associé à l'interruption I_{RT}. Les registres 11 comportant les masques d'interruptions et vecteurs d'interruptions relatifs à l'interruption I_{RT} sont donc déclarés comme sécurisés (ils sont associés au S-bit) et le masque d'interruption est mis à jour pour permettre l'interruption de l'application A par l'interruption I_{RT} .

Selon l'invention, lorsque l'application sécurisée A est exécutée par le coeur de processeur 2, et que le contrôleur d'interruption 3 reçoit par l'intermédiaire du bus d'interruptions B_{IT}, une interruption I_{RT}, le contrôleur 3 présente au coeur de processeur 2, des données comprenant le vecteur d'interruption relatif à l'interruption I_{RT} fournissant les données nécessaires pour l'exécution du sous-programme d'interruption SP_{RT}.

A la réception de l'interruption non sécurisée I_{RT} pendant l'exécution de l'application sécurisée A, le coeur de processeur 2 est adapté pour exécuter préalablement une application APPᵣₑₜ sécurisée, de préparation au retour dans le mode sécurisé, ci-après dénommée « application de retour ».

Cette application de retour APPᵣₑₜ comprend tout d'abord des instructions pour sauvegarder l'état du processeur dans les registres de fonctionnement 10, de manière à pouvoir reprendre l'exécution du processus A interrompu en l'état où il se trouvait au moment de la prise en compte de l'interruption I_{RT}.

L'application de retour APPᵣₑₜ comprend en outre des instructions pour initialiser le compteur 12 à la valeur stockée dans le registre de départ R_{D}.

L'application de retour APPᵣₑₜ comprend enfin des instructions pour démarrer le compteur 12, c'est-à-dire activer la logique de comptage, et provoquer le basculement du processeur 1 dans le mode non sécurisé, la valeur du registre de mode 9 associé au processeur 1 étant alors mise à 0. Le module d'exécution 8 entreprend alors l'exécution du sous-programme d'interruptions SP_{RT} .

Le retour du processeur 1 dans le mode sécurisé est provoqué lorsque la valeur du compteur 12 est égale à une valeur prédéterminée.

Dans un mode de réalisation particulier de l'invention, le compteur 12 est un registre d'horloge. La valeur de départ stockée dans le registre 13 de départ est égale à Tmax (par exemple égal au temps de traitement moyen de 3 interruptions non sécurisées). Ainsi une fois démarré, le compteur 12 est décrémenté au fil du temps (en fonction d'une horloge régissant le calage temporel du compteur 12).

Le compteur 12 est configuré pour émettre une interruption sécurisée I_{S} une fois qu'il atteint la valeur 0.

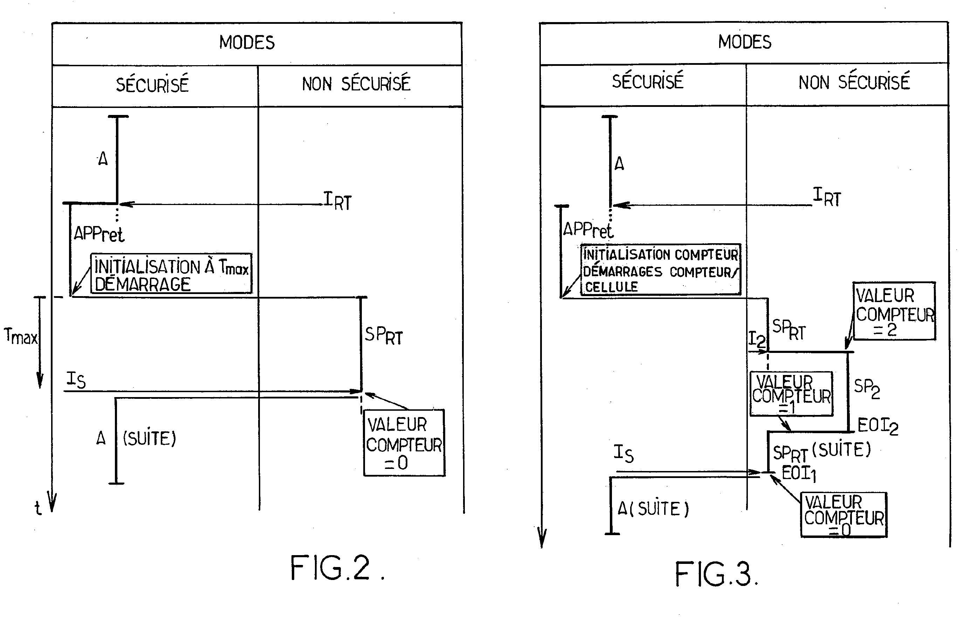

La figure 2 illustre les exécutions successives dans le temps (axe vertical) par le processeur 1 des différentes applications appelées, dans ce mode de réalisation de l'invention, dans le mode sécurisé ou dans le mode non sécurisé, ainsi que les passages de l'un à l'autre de ces modes.

Ainsi, comme illustré sur la figure 2, à la réception de l'interruption non sécurisée I_{RT} pendant l'exécution de l'application sécurisée A, le coeur de processeur 2 est adapté pour exécuter préalablement l'application de retour APPᵣₑₜ sécurisée, qui provoque la sauvegarde de l'état du processeur 1 dans les registres de fonctionnement 10 et qui initialise le compteur 12 avec la valeur R_{D}=Tmax stockée dans le registre de départ 13. L'application APPᵣₑₜ démarre le compteur 12 et provoque le basculement du processeur 1 dans le mode non sécurisé, la valeur du registre de mode 9 associé au processeur 100 étant alors mise à 0.

Le module d'exécution 8 entreprend alors l'exécution du sous-programme d'interruptions SP_{RT}.

Lorsque la valeur du compteur 12 atteint 0, le compteur est adapté pour alors émettre une interruption sécurisée I_{S}.

Lorsque cette interruption sécurisée I_{S} est reçue par le contrôleur d'interruption 3 par l'intermédiaire du bus d'interruptions B_{IT}, il la transmet au coeur de processeur 2, ce qui provoque le retour dans le mode sécurisé (le processeur étant configuré, comme indiqué précédemment, de façon classique pour que la survenue d'une interruption sécurisée pendant une exécution non sécurisée provoque un retour vers le mode sécurisé).

Avantageusement, le compteur est par exemple un circuit de surveillance rechargeable de type « Watchdog », par exemple du type mis en oeuvre dans les microcontrôleurs ST62T20C de STMicroelectronics (à la variante près que l'arrivée du compteur ne provoque pas un reset, mais une interruption sécurisée).

Un tel mode de réalisation permet d'obliger le processeur à revenir dans le mode sécurisé, indépendamment des événements qui peuvent survenir (par exemple la réception d'interruptions non sécurisées supplémentaires pendant l'exécution du sous-programme d'interruption SP_{RT}).

Dans un autre mode de réalisation particulier de l'invention, le compteur 12 est un compteur d'interruptions imbriquées. Dans ce mode de réalisation, le coeur de processeur 2 comprend en outre une cellule matérielle de contrôle 15 associée au compteur d'interruptions 12.

Cette cellule matérielle 15 reçoit un signal d'activation de l'application APPᵣₑₜ lors de la réception de la première de ces interruptions provoquant le passage du mode sécurisé au mode non sécurisé.

Le compteur d'interruptions 12 et la cellule matérielle 15 sont adaptés pour que le compteur d'interruptions 12, une fois démarré, soit incrémenté, par la cellule matérielle 15, d'une unité à chaque fois que le contrôleur d'interruptions 3 présente au coeur de processeur 2 une nouvelle interruption non sécurisée à traiter. Et le compteur d'interruptions 12 est adapté pour être décrémenté d'une unité lorsqu'un sous-programme d'interruption non sécurisé a été exécuté, par exemple dès qu'une instruction « End Of Interrupt » doit être exécutée. Le compteur d'interruption indique ainsi le nombre d'interruptions non sécurisées restant à traiter par le processeur.

La valeur de départ R_{D} stockée dans le registre de départ 13 est égale à1.

La cellule matérielle de contrôle 15 est adaptée en outre pour, une fois activée, vérifier la valeur du compteur d'interruptions 12 à chaque fois qu'une instruction « End of Interrupt » (EOI) a eu lieu et qu'une décrémentation du compteur a été réalisée, et pour, lorsque la valeur du compteur est 0, provoquer le retour dans le mode sécurisé. Elle est configurée par exemple pour émettre alors une interruption sécurisée Is.

Dans ce mode de réalisation particulier de l'invention, en référence à la figure 3, lorsque l'interruption non sécurisée I_{RT} survient lors de l'exécution de l'application sécurisée A par le coeur de processeur 2, l'application de retour APPᵣₑₜ initialise le compteur 12 à l'aide de la valeur R_{D}=1, stockée dans le registre de départ 13. Cette valeur alors prise par le compteur d'interruptions 12 indique qu'une première interruption non sécurisée, dans le cas considéré, l'interruption I_{RT}, a été reçue et que le sous-programme d'interruption associé, dans ce cas le sous-programme SP_{RT}, doit être exécuté par le coeur de processeur 2. L'application APPᵣₑₜ active en outre la cellule matérielle de contrôle 15, et provoque le basculement du processeur 1 dans le mode non sécurisé.

Le module d'exécution 8 entreprend alors l'exécution du sous-programme d'interruptions SP_{RT}. Si le contrôleur d'interruptions 3 présente, conformément à ses masques d'interruptions stockés dans les registres d'interruptions 11, au coeur de processeur 2 pendant cette exécution, une nouvelle interruption I₂ non sécurisée à traiter associée au sous-programme SP2, l'exécution du sous-programme d'interruption SP_{RT} associé à la première interruption est interrompue. Le contexte est sauvegardé de manière à pouvoir être récupéré et le compteur d'interruptions 12 est incrémenté d'une unité.

Le compteur d'interruptions 12 indique donc alors la valeur 2, correspondant au nombre des sous-programmes d'interruption (SP_{RT} et SP₂) à exécuter.

L'exécution du sous-programme d'interruption SP2 de la seconde interruption I₂ commence alors et se termine par l'exécution d'une instruction EOI.

Cette instruction EOI est détectée par la cellule matérielle 15, qui décrémente le compteur d'interruptions 12 d'une unité (sa valeur est à présent de 1), puis contrôle la nouvelle valeur du compteur, en la comparant à 0. La valeur étant là différente de 0, le contexte d'exécution non sécurisé relatif au sous-programme interrompu SP_{RT} est rétabli à l'aide du contenu des registres de fonctionnement 10, puis l'exécution de ce sous-programme est reprise. Elle se termine par l'exécution d'une instruction EOI, qui provoque la décrémentation par la cellule matérielle 15 du compteur d'interruptions d'une unité (sa valeur est à présent de 0), suivie du contrôle par la cellule matérielle de contrôle 15 de cette valeur actualisée.

La valeur courante du compteur d'interruption 12 étant égale à 0, la cellule matérielle de contrôle 15 provoque le retour du processeur 1 dans le mode sécurisé.

Ce mode de réalisation particulier permet de revenir dans le mode sécurisé dès la fin du traitement des interruptions non sécurisées.

La cellule matérielle de contrôle 15 est par exemple une machine d'état associée à un registre, la mise à 1 de ce registre permettant d'activer cette machine d'état.

Dans un mode de réalisation particulièrement avantageux, le processeur comprend deux compteurs. Le premier de ces compteurs est un compteur de type registre d'horloge décrit plus haut associé à un premier registre de départ stockant un temps maximum Tmax. Le second de ces compteurs est un compteur d'interruptions du type décrit ci-dessus associé à un registre de départ contenant la valeur 1 et à une cellule matérielle de contrôle 15.

Cette double disposition permet de bénéficier des avantages liés à chacun des deux modes de réalisation particuliers décrits ci-dessus. En effet, le retour dans le mode sécurisé est effectif dès que l'un des compteurs atteint la valeur, qui lui est associée et qui provoque le retour dans le mode sécurisé. Elle permet notamment de revenir dans le mode sécurisé dès que le traitement des interruptions non sécurisées est terminé, tout en ne laissant pas une application malicieuse empêcher durablement le retour dans le mode sécurisé en émettant des interruptions non sécurisées consécutives, puisqu'au bout d'un temps prédéfini (Tmax), le basculement vers le mode sécurisé sera provoqué.

Le traitement effectué par le processeur 1 a été décrit ci-dessus en référence à l'interruption I_{RT} intervenant lors de l'exécution de l'application A. L'invention peut bien évidemment être mise en oeuvre pour toute interruption non sécurisée choisie lors de l'exécution par le processeur de toute application sécurisée choisie.

La présente invention s'applique aussi dans le cas où le processeur a la capacité de fonctionner dans un mode superviseur (accessible principalement par l'OS), et en un mode utilisateur, ces modes permettant notamment que les programmes en mode utilisateur n'aient accès qu'à certaines ressources ou instructions du processeur, tandis que les programmes en mode superviseur ont accès à toutes les instructions du processeur ainsi que tous les registres et ressources.

Dans ce cas, il existe un mode sécurisé et un mode non sécurisé relatif à chacun de ces modes respectivement superviseur et utilisateur.

Il y a donc un mode sécurisé et superviseur, un mode sécurisé et utilisateur, un mode non sécurisé et superviseur et un mode non sécurisé et utilisateur.

La présente invention a été décrite en relation avec des valeurs prédéfinies de départ, de fin et/ou d'incrément particulières. L'invention peut évidemment être mise en oeuvre avec des valeurs différentes de celles indiquées.

## Revendications

1. Procédé de traitement d'interruptions dans un processeur (1) adapté pour fonctionner soit dans un premier mode, soit dans un second mode, et au moins un compteur (12), ledit procédé comprenant les étapes selon lesquelles, lorsqu'une interruption (I_{RT}) associée à un sous-programme d'interruption (SP_{RT}) exécutable dans le second mode est envoyée au processeur au cours de l'exécution d'un processus par ledit processeur dans le premier mode,
- le compteur est initialisé à une valeur de départ (R_{D}) ; puis
- le compteur est démarré tandis que le processeur est basculé dans le second mode pour exécuter le sous-programme d'interruption associé à l'interruption ;
- lorsque le compteur atteint une valeur de fin, le processeur est ramené dans le premier mode pour la poursuite de l'exécution du processus.

2. Procédé selon la revendication 1, selon lequel le compteur (12) du processeur (1) est un compteur de temps qui indique un temps écoulé depuis le démarrage dudit compteur, et la valeur de fin est un temps maximum (Tmax).

3. Procédé selon la revendication 1 ou la revendication 2, selon lequel le compteur (12) du processeur (1) est un compteur d'interruptions qui indique un nombre d'interruptions imbriquées à traiter par le processeur, lesdites interruptions étant associées à des sous-programmes d'interruption respectifs exécutables dans le second mode, ledit compteur une fois démarré étant incrémenté d'une unité lors de la réception de chacune desdites interruptions, et ledit compteur une fois démarré étant décrémenté d'une unité une fois le traitement d'un desdits programmes d'interruption terminé.

4. Procédé selon la revendication 2 et la revendication 3, selon lequel lorsqu'une interruption déterminée (I_{RT}) à traiter associée à un sous-programme d'interruption (SP_{RT}) exécutable dans le second mode survient au cours d'une exécution d'un processus dans le premier mode, un compteur d'interruptions et un compteur de temps sont démarrés, le processeur étant basculé dans le premier mode dès qu'une valeur de fin de l'un quelconque des compteurs est atteinte par ledit compteur.

5. Procédé selon l'une quelconque des revendications 3 et 4, selon lequel la valeur de fin du compteur (12) d'interruptions est représentative d'un nombre nul d'interruptions imbriquées à traiter par le processeur (1).

6. Processeur (1) adapté pour fonctionner soit dans un premier mode, soit dans un second mode et comprenant
- un compteur (12);
- des moyens d'initialisation (APPᵣₑₜ) pour, lorsqu'une interruption associée à un sous-programme d'interruption exécutable dans le second mode est envoyée au processeur au cours de l'exécution d'un processus par ledit processeur dans le premier mode, initialiser ledit compteur à une valeur de départ et démarrer ledit compteur ;
- des premiers moyens de basculement (APPᵣₑₜ) pour, lors du démarrage du compteur, provoquer le basculement du processeur dans le second mode pour l'exécution, dans le second mode, du sous-programme d'interruption associé à l'interruption ;
- des seconds moyens de basculement pour, lorsque le compteur atteint une valeur de fin, ramener le processeur dans le premier mode .

7. Processeur (1) selon la revendication 6, comprenant un compteur de temps adapté pour indiquer un temps écoulé depuis le démarrage dudit compteur, la valeur de fin indiquant un temps maximum (Tmax).

8. Processeur selon la revendication 6 ou la revendication 7, comprenant un compteur d'interruptions adapté pour indiquer un nombre d'interruptions imbriquées à traiter reçues par le processeur, ledit compteur une fois démarré étant adapté pour être incrémenté lors de la réception par le processeur d'une nouvelle interruption à traiter, et être décrémenté lors de la fin du traitement d'une interruption par le processeur.

9. Processeur (1) selon la revendication 7 et la revendication 8, comprenant un compteur d'interruptions et un compteur de temps et dans lequel :
- les moyens d'initialisation sont adaptés pour, lorsqu'une interruption à traiter associée à un sous-programme d'interruption exécutable dans le second mode est reçue par le processeur au cours d'une exécution d'un processus dans le premier mode, démarrer et initialiser chaque compteur ;
- et les seconds moyens de basculement sont adaptés pour ramener le processeur dans le premier mode dès qu'une valeur de fin de l'un quelconque des compteurs est atteinte par ledit compteur, pour la poursuite de l'exécution du processus.

10. Processeur (1) selon l'une quelconque des revendications 8 et 9, selon lequel la valeur de fin du compteur d'interruptions est représentative d'un nombre nul d'interruptions imbriquées à traiter par le processeur.
